Europäisches Patentamt

European Patent Office

Office européen des brevets

(19)

(11) **EP 0 738 829 B1**

(12) **EUROPEAN PATENT SPECIFICATION**

(45) Date of publication and mention
of the grant of the patent:
**21.05.2003  Bulletin 2003/21**

(51) Int Cl.⁷: **F02D 41/26**, F02D 41/38

(21) Application number: **96103651.4**

(22) Date of filing: **08.03.1996**

(54) **Fuel injection control apparatus of diesel engine**

Kraftstoffeinspritzungssteuergerät für einen Dieselmotor

Dispositif de commande de l'injection de carburant pour moteur diesel

(84) Designated Contracting States:
**DE FR GB**

(30) Priority:  **21.04.1995  JP 9713895**

(43) Date of publication of application:
**23.10.1996  Bulletin 1996/43**

(73) Proprietor: **TOYOTA JIDOSHA KABUSHIKI
KAISHA
Aichi-ken (JP)**

(72) Inventor: **Kizaki, Mikio
Toyota-shi, Aichi-ken (JP)**

(74) Representative:
**Leson, Thomas Johannes Alois, Dipl.-Ing. et al
c/o TBK-Patent,
P.O. Box 20 19 18
80019 München (DE)**

(56) References cited:
**EP-A- 0 684 372**          **GB-A- 2 201 247**

• **PATENT ABSTRACTS OF JAPAN vol. 011, no.
256 (P-607), 20 August 1987 & JP 62 062219 A
(NIPPON DENSO CO LTD), 18 March 1987**

**Description**

BACKGROUND OF THE INVENTION

(1) Field of the Invention

The present invention generally relates to a fuel injection control apparatus of a diesel engine according to the preamble of claim 1, and more particularly to a fuel injection control apparatus which controls an amount of fuel to be injected to a diesel engine in accordance with each pulse-input time of pulse signals from a rotation sensor.

(2) Description of the Related Art

A fuel injection control apparatus which controls a fuel injection pump of a diesel engine with an electronic control unit is known. This apparatus controls an amount of fuel injected by the fuel injection pump to the engine, in accordance with a movement of a plunger in the fuel injection pump, such that the amount of the fuel injected to the engine accords with a desired amount. In the above apparatus, the amount of the fuel injected to the engine is controlled by switching ON or OFF an electromagnetic spill valve to close or open a spill passage. When the spill passage is closed by switching ON the spill valve, the amount of the fuel injected by the fuel injection pump to the engine is maintained. When the spill passage is opened by switching OFF the spill valve, a certain amount of fuel within a high-pressure chamber of the fuel injection pump is spilt from the spill passage and the amount of the fuel injected to the engine is reduced by the amount of the spilt fuel. Since the fuel spilt from the spill passage is circulated to the high-pressure chamber of the fuel injection pump, the amount of the fuel injected to the engine is controlled in accordance with the desired amount by switching ON or OFF the spill valve.

Japanese Laid-Open Patent Application JP-62-267547 discloses a fuel injection control apparatus according to the preamble of claim 1. In this conventional apparatus, the amount of fuel injected to the diesel engine is controlled in accordance with pulse signals from a rotation sensor. The rotation sensor is disposed in the fuel injection pump and senses a rotating angle of a drive shaft of the fuel injection pump. The drive shaft of the fuel injection pump is rotated in synchronism with rotation of a crankshaft of the diesel engine. Each of the pulse signals output by the rotation sensor indicates a rotating angle of the drive shaft of the fuel injection pump.

In the above fuel injection control apparatus, the control of the amount of the fuel injected is performed by determining the on-time the spill valve is switched to open the spill passage in accordance with the pulse signals from the rotation sensor. Thus, in order to reliably control the amount of the fuel injected to the diesel engine in an undesired condition, it is necessary that the fuel injection control apparatus determines a correct pulse count of the pulse signals from the rotation sensor. To realize this, it is important that the fuel injection control apparatus detects an accurate value of a pulse count signal from a pulse counter even when it is in an undesired condition.

For example, in-a certain operating condition of the diesel engine, a discharging of static electricity within an automotive vehicle of the diesel engine may take place. If the discharging of static electricity takes place, a disturbance tends to enter the diesel engine from a control unit of the apparatus or from a connecting line between the control unit and the rotation sensor.

It is conceivable that two kinds of influences are put on the pulse count signal when the disturbance takes place on the diesel engine. One of the two kinds of influences is an inclusion of a noise pulse in the pulse count signal, and the other is an occurrence of a missing pulse in the pulse count signal.

The above conventional apparatus does not take any countermeasure against the inclusion of a noise pulse in the pulse count signal. In the above conventional apparatus, the noise pulse is erroneously detected as one of the pulse signals output by the rotation sensor. The pulse count is incorrectly incremented by the noise pulse. Accordingly, in the above conventional apparatus, the pulse count indicated by the pulse count signal at the time of the inclusion of the noise pulse is greater than the correct value.

In the above case, the spill valve is switched to open the spill passage at a time earlier than the correct on-time of the spill valve, and the amount of the fuel injected is smaller than a desired amount of the injected fuel for the operating condition of the diesel engine. For this reason, a drop of the engine speed or an engine stall tends to occur on the above conventional apparatus in the present case.

On the other hand, when a missing pulse in the pulse count signal takes place, the above conventional apparatus does not take any countermeasure against the occurrence of the missing pulse. In the above conventional apparatus, if a missing pulse in the pulse count signal takes place, the occurrence of the missing pulse cannot be detected. The pulse count is not incremented if the missing pulse takes place. Accordingly, in the above conventional apparatus, the pulse count indicated by the pulse count signal at the time of the occurrence of the missing pulse is smaller than the correct value.

In the above case, the spill valve is switched to open the spill passage at a time after the correct on-time of the spill valve, and the amount of the fuel injected is greater than a desired amount of the fuel injected. For this reason, a rapid increase of the engine speed tends to occur on the above conventional apparatus in the present case.

## SUMMARY OF THE INVENTION

The object of the present invention is to provide an improved fuel injection control apparatus in which the above-described problems are eliminated.

Another aim of the present invention is to provide a fuel injection control apparatus which carries out the control of the amount of fuel injected to the diesel engine with a high level of accuracy and stability even when a disturbance enters the diesel engine.

The above-mentioned objects of the present invention is achieved by a fuel injection control apparatus having the features of claim 1.

The fuel injection control apparatus of the present invention can accurately and stably control the amount of the fuel injected even when the inclusion of a noise pulse takes place, preventing the occurrence of a drop of the engine speed or an engine stall. The fuel injection control apparatus of the present invention can accurately and stably control the amount of the fuel injected even at the time of the occurrence of a missing pulse, preventing the occurrence of a rapid increase of the engine speed.

## BRIEF DESCRIPTION OF THE DRAWINGS

The above and other objects, features and advantages of the present invention will be more apparent from the following detailed description when read in conjunction with the accompanying drawings in which:

FIG.1 is a cross-sectional view of a diesel engine in which a fuel injection control apparatus in one embodiment of the present invention is included;

FIG.2 is an enlarged cross-sectional view of a fuel injection pump of the diesel engine in FIG.1;

FIG.3 is a block diagram of an electronic control unit of the diesel engine in FIG.1;

FIG.4 is a flowchart for explaining a fuel injection control procedure executed by the electronic control unit;

FIGS.5A through 5D are timing charts for explaining influences on a pulse count signal when a disturbance enters the diesel engine;

FIG.6 is a flowchart for explaining a spill-valve on-time setting routine performed within the fuel injection control procedure in FIG.4; and

FIG.7 is a timing chart for explaining determinations of a spill-off pulse count and a remaining angle in the spill-valve on-time setting routine in FIG.6.

## DESCRIPTION OF THE PREFERRED EMBODIMENT

A description will now be given of a preferred embodiment of the present invention with reference to the accompanying drawings.

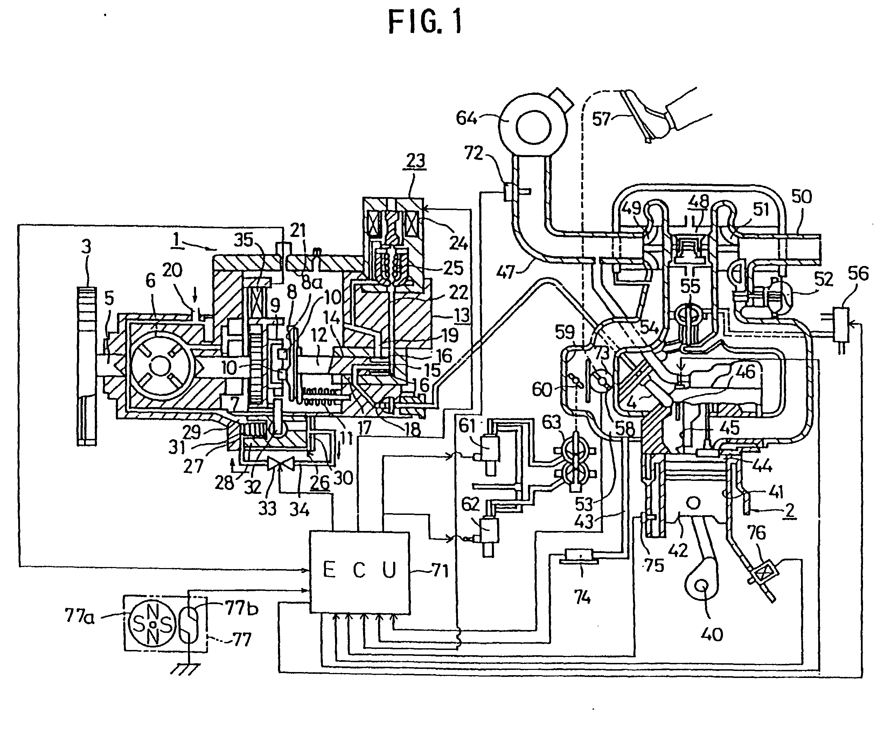

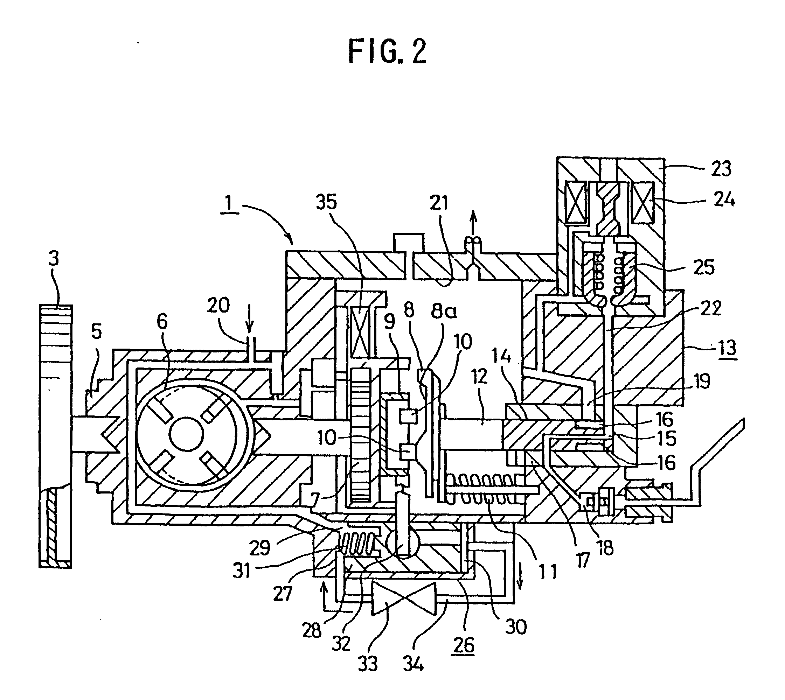

FIG.1 shows a diesel engine 2 with a super charger in which a fuel injection control apparatus in one embodiment of the present invention is included. FIG.2 is an enlarged cross-sectional view of a distribution-type fuel injection pump 1 of the diesel engine 2 in FIG.1.

Referring to FIGS.1 and 2, the fuel injection pump 1 includes a drive pulley 3, and the drive pulley 3 is connected to a crankshaft 40 of the diesel engine 2 via a belt. The fuel injection pump 1 is operated by rotation of the drive pulley 3. The fuel injection pump 1 supplies pressurized fuel to a fuel injection nozzle 4 which is provided for each of cylinders 41 of the diesel engine 2. The diesel engine 2 in the present embodiment has four cylinders 41. The fuel injection pump 1 thus carries out the fuel injection for the fuel injection nozzles 4 for the cylinders 41 of the diesel engine 2.

For the sake of simplicity, one cylinder 41 and one fuel injection nozzle 4 in the diesel engine 2 are shown in FIG.1.

The drive pulley 3 is secured to an inlet end of a drive shaft 5 of the fuel injection pump 1. A fuel feed pump 6, which is comprised of a vane pump, is connected to an intermediate portion of the drive shaft 5. In FIGS.1 and 2, only for the fuel feed pump 6, a cross-sectional view of the element 6 is shown. A pulser gear 7 is connected to an outlet end of the drive shaft 5.

On an outer peripheral surface of the pulser gear 7, a plurality of teeth are formed so that the teeth are equally spaced around the center of the pulser gear 7. An angle between two adjacent ones of the teeth of the pulser gear 7 is, for example, 11.25 degrees in the crank angle. In the present embodiment, four cut-out portions are provided on the outer peripheral surface of the pulser gear 7 in place of corresponding ones of the teeth, so that the cut-out portions are equally spaced around the center of the pulser gear 7. The number of the cut-out portions of the pulser gear 7 is the same as the number of the cylinders 41 of the diesel engine 2. Further, a cam plate 8 is connected to the outlet end of the drive shaft 5 through a coupling (not shown).

A roller ring 9 is disposed between the pulser gear 7 and the cam plate 8. A plurality of cam rollers 10 on the periphery of the roller ring 9 are attached to a cam face 8a of the cam plate 8. A spring 11 is provided on the cam plate 8 so that the cam plate 8 is always pushed against the cam rollers 10 by a biasing force from the spring 11.

A plunger 12, provided for pressurizing fuel, is secured to a rear face of the cam plate 8 so that the cam plate 8 and the plunger 12 are rotated together by rotation of the drive shaft 5. A rotating force of the drive shaft 5 is transmitted to the cam plate 8 via the coupling between the cam plate 8 and the drive shaft 5. The cam plate 8 is engaged to and disengaged from the cam rollers 10 when the cam plate 8 is rotated by the rotation of the drive shaft 5. Accordingly, the plunger 12 is moved back and forth in axial directions (which are the right and left directions in FIGS.1 and 2) in a reciprocating manner when the plunger 12 is rotated.

A pump cylinder 14 is provided in a pump housing 13. An outlet end of the plunger 12 is fitted into the cylinder 14. A high-pressure chamber 15 is formed between the outlet end of the plunger 12 and an inside end face of the cylinder 14. A plurality of inlet grooves 16 and a plurality of distribution ports 17 are formed at outer peripheral portions of the outlet end of the plunger 12. Both the number of the inlet grooves 16 and the number of the distribution ports 17 are the same as the number of the cylinders of the diesel engine 2. An inlet passage 19, including an inlet port communicating with one of the inlet grooves 16, is formed in the pump housing 13. A distribution passage 18, communicating with the distribution ports 17, is formed within the pump housing 13.

The fuel feed pump 6 is operated by the rotation of the drive shaft 5, and fuel from a fuel tank (not shown) enters the inside of the drive shaft 5 via a fuel supply port 20. The fuel from the drive shaft 5 is supplied to a fuel chamber 21. One end of the inlet passage 19 is open to the fuel chamber 21.

When the plunger 12 is rotated by the rotation of the drive shaft 5 and moved backward (in the left direction in FIGS.1 and 2), the pressure of the fuel in the high-pressure chamber 15 is reduced. During this suction stroke of the plunger 12 for the high-pressure chamber 15, one of the inlet grooves 16 is open to the inlet passage 19 so that the fuel from the fuel chamber 21 is delivered to the high-pressure chamber 15.

When the plunger 12 is rotated by the rotation of the drive shaft 5 and moved forward (in the right direction in FIGS.1 and 2), the pressure of the fuel in the high-pressure chamber 15 is increased. During this compression stroke of the plunger 12 for the high-pressure chamber 15, one of the distribution ports 17 is open to the distribution passage 18 so that the pressurized fuel from the distribution passage 18 is delivered to the fuel injection nozzle 4 for a corresponding one of the cylinders of the diesel engine 2. The delivery timing of the pressurized fuel to the fuel injection nozzle 4 is controlled by using an electromagnetic spill valve 23 which will be described later. The fuel injection for the corresponding cylinder of the diesel engine 2 is carried out by the fuel injection pump 1.

A spill passage 22, including a first end port open to the fuel chamber 21 and a second end port open to the high-pressure chamber 15, is formed in the pump housing 13. The spill passage 22 is provided to spill the fuel from the high-pressure chamber 15 into the fuel chamber 21.

The spill valve 23 is provided at an intermediate portion of the spill passage 22 to control a flow of the fuel from the high-pressure chamber 15 being spilt to the fuel chamber 21. The spill valve 23 includes a coil 24 and a valve element 25. The valve element 25 is arranged at a portion of the spill passage 22, and this portion interconnects the first end port and the second end port. The spill valve 23 is always open to the high-pressure chamber 15 at the second end port of the spill passage 22.

When no current is supplied to the coil 24 (in the OFF state), the valve element 25 is open to the fuel chamber 21 at the first end port, so that the fuel from the high-pressure chamber 15 is spilt to the fuel chamber 21. When current is supplied to the coil 24 (in the ON state), the valve element 25 is closed to stop the spilling of the fuel from the high-pressure chamber 15 to the fuel chamber 21.

Accordingly, by controlling the on-time of the spill valve 23, the opening and closing operations of the valve element 25 are performed so that the flow of the fuel from the high-pressure chamber 15 being spilt to the fuel chamber 21 is controlled.

In the present embodiment, the spill valve 23 is opened to the fuel chamber 21 during the pressure stroke of the plunger 12 for the high-pressure chamber 15, so that an increased pressure of the fuel in the high-pressure chamber 15 can be reduced by the spilling of the fuel to the fuel chamber 21. During the pressure stroke, the fuel injection by the fuel injection nozzle 4 to the diesel engine 2 is stopped.

If the spill valve 23 is opened to the fuel chamber 21, the pressure of the fuel in the high-pressure chamber 15 does not rise to a valve-opening pressure of the fuel injection nozzle 4 even when the plunger 12 is moved forward. The fuel injection nozzle 4 at this time does not inject the fuel to the diesel engine 2.

If-the opening and closing operations of the valve element 25 are performed by controlling the on-time of the spill valve 23 during the forward movement of the plunger 12, it is possible to control the flow rate of the fuel injected by the fuel injection nozzle 4 to the diesel engine 2 as well as the fuel injection ratio of the fuel injection nozzle 4.

A timer unit 26 is disposed below the pump housing 13. The timer unit 26 is provided to adjust the timing of the fuel injection by the fuel injection valve 4. A position of the roller ring 9 relative to the drive shaft 5 is modified by the timer unit 26. The timing that the cam face 8a is engaged with the cam rollers 10 can be controlled by modification of the position of the roller ring 9 relative to the drive shaft 5. Therefore, by the modification of the position of the roller ring 9 relative to the drive shaft 5, the timing that the cam plate 8 and the plunger 12 are moved forward or backward can be controlled.

The timer unit 26 is operated by hydraulic pressure. The timer unit 26 includes a timer housing 27 and a timer piston 28 within the timer housing 27. The timer unit 26 includes a low-pressure chamber 29 at one end of the timer housing 27, a high-pressure chamber 30 at the other end of the timer housing 27, and a timer spring 31 within the low-pressure chamber 29. The timer spring 31 applies a biasing force to push the timer piston 28 against the high-pressure chamber 30. The timer unit 26 includes a slide pin 32, and the timer piston 28 is connected to the roller ring 9 through the slide pin 32.

In the timer unit 26, the fuel from the fuel feed pump 6 is delivered to the high-pressure chamber 30 via a fuel passage (not shown). A position of the timer piston 28 relative to the timer housing 27 is determined according to a relationship between the biasing force of the timer spring 31 and the pressure of the fuel within the high-pressure chamber 30. If the position of the timer piston 28 is determined, the position of the roller ring 9 relative to the drive shaft 5 is determined. A modification of the position of the roller ring 9 is transferred to the plunger 12 through the cam plate 8. Therefore, the timing that the plunger 12 is moved forward or backward is controlled by the timer unit 26.

A timing control valve 33 is provided in the timer unit 26 to adjust the pressure of the fuel within the high-pressure chamber 30. A communication passage 34 which interconnects the high-pressure chamber 30 and the low-pressure 29 is provided on the timer unit 26, and the timing control valve 33 is arranged at an intermediate portion of the communication passage 34.

The timing control valve 33 is a solenoid valve which is switched ON or OFF in accordance with a control signal output by a control unit (not shown). A duty ratio of this control signal is controlled. The duty ratio of the control signal means a ratio of an on-time of the solenoid valve 33 within a duty cycle to a total duty-cycle time for controlling the switching of the solenoid valve 33. If the duty ratio of the control signal input to the solenoid valve 33 is varied, the opening and closing operations of the solenoid valve 33 are modified to adjust the pressure of the fuel within the high-pressure chamber 30. If the pressure of the fuel within the high-pressure chamber 30 is varied, the timing of the movements of the plunger 12 is modified and the timing of the fuel injection of the fuel injection nozzle 4 is modified.

A rotation sensor 35 is disposed on the outer periphery of the pulser gear 7. The rotation sensor 35 is integrally formed with the roller ring 9. This rotation sensor 35 includes an electromagnetic pickup. The rotation sensor 35 senses one of the teeth of the rotating pulser gear 7 between the two adjacent cut-out portions, and output a pulse signal each time one of the teeth of the rotating pulser gear 7 crosses the pickup of the rotation sensor 35. The pulse signals output by the rotation sensor 35 during the rotation of the crankshaft 40 are used to indicate an engine speed of the diesel engine 2 as well as a rotating speed of the drive shaft 5.

Since the rotation sensor 35 is integrally formed with the roller ring 9, the rotation sensor 35 outputs the pulse signals in synchronism with the movements of the plunger 12, regardless of the controlling operation by the timer unit 26.

Next, a description will be given of the diesel engine 2. For each of the four cylinders of the diesel engine 2, a main combustion chamber 44 is provided. The main combustion chamber 44 is formed with the cylinder 41, a piston 42, and a cylinder head 43. Also, for each of the four cylinders of the diesel engine 2, a subsidiary chamber 45 adjacent to the main combustion chamber 44 is provided.

For the sake of simplicity, a description of the diesel engine 2 including the main combustion chamber 44 and the subsidiary chamber 45 for only one cylinder thereof will be given. The fuel from the fuel injection nozzle 4 enters the subsidiary chamber 45 before being supplied to the main combustion chamber 44. A glow plug 46, which is a heating element for facilitating start-up, is provided in the subsidiary chamber 45.

An intake pipe 47 and an exhaust pipe 50 are mounted on the diesel engine 2. A turbo charger 48 is mounted on the diesel engine 2 at a location where the intake pipe 47 and the exhaust pipe 50 join. The turbo charger 48 includes a compressor 49 and a turbine 51, and a rotating shaft of the compressor 49 is connected to a rotating shaft of the turbine 51. The compressor 49 is provided in the intake pipe 47 on the diesel engine 2. The turbine 51 is provided in the exhaust pipe 50 on the diesel engine 2.

A waist gate valve 52 is attached to the exhaust pipe 52. The waist gate valve 52 adjusts a charged pressure of intake air having an increased density delivered by the turbo charger 48 to the intake pipe 47. The turbo charger 48 utilizes an energy of exhaust gas from the diesel engine 2 to rotate the turbine 51, and the rotating shaft of the compressor 49 is rotated by the rotating shaft of the turbine 51. The rotation of the compressor 49 increases the pressure of intake air from the intake pipe 47 to the main combustion chamber 44 of the diesel engine 2.

The turbo charger 48 serves to supply intake air having an increased density to the main combustion chamber 44 of the diesel engine 2. Thus, an increased amount of an air-fuel mixture is subjected to combustion in the main combustion chamber 44 so that an output torque of the diesel engine 2 is increased.

A feedback pipe 54 is provided in the diesel engine 2 to partially deliver the exhaust gas from the exhaust pipe 50 into the intake pipe 47 via an intake port 53. The intake port 53 is provided at an intermediate portion of the intake pipe 47. An exhaust gas recirculation (EGR) valve 55 is arranged at an intermediate portion of the feedback pipe 54 to control the flow of the exhaust gas from the exhaust pipe 50 to the intake pipe 47. The EGR valve 55 is opened or closed under control of a vacuum switching valve (VSV) 56.

A first throttle valve 58 is provided at an intermediate portion of the intake pipe 47. An opening angle of the first throttle valve 58 is controlled in accordance with a depressed amount of an accelerator pedal 57 depressed by a vehicle operator. A bypass passage 59 which passes around the first throttle valve 58 is provided in the intake pipe 47. A second throttle valve 60 is provided in the bypass passage 59 in parallel to the first throttle valve 58.

An opening angle of the second throttle valve 60 is controlled by an actuator 63. The actuator 63 includes two diaphragm chambers the pressures of which are controlled under control of vacuum switching valves (VSV) 61 and 62. The opening angle of the second throttle valve 60 is controlled in accordance with an operating condition of the diesel engine 2.

The spill valve 23 and the timing control valve 33 are provided on the fuel injection pump 1. The glow plug 46 and the VSVs 56, 61 and 62 are provided on the diesel engine 2. Inputs of these elements are electrically connected to an electronic control unit (ECU) 71. The driving timing of each of these elements is controlled by a control signal output from the ECU 71.

In order to detect an operating condition of the diesel engine 2, various sensors in addition to the above rotation sensor 35 are provided.

An intake air temperature sensor 72 is disposed on the intake pipe 47 in the vicinity of an air cleaner 64. This sensor 72 senses a temperature of intake air within the intake pipe 47 in the vicinity of the air cleaner 64, and outputs a signal indicative of the intake air temperature to the ECU 71.

An accelerator opening angle sensor 73 is arranged at the first throttle valve 58 in the intake pipe 47. This sensor 73 senses the opening angle of the first throttle valve 58 and outputs a signal indicative of an accelerator opening angle ACCP to the ECU 71. The accelerator opening angle ACCP indicated by the signal from the sensor 73 is a parameter indicating a value of an operating load of the diesel engine 2.

An intake air pressure sensor 74 is disposed on the intake pipe 47 in the vicinity of the intake port 53. This sensor 74 senses a charged pressure of intake air having an increased density supplied from the turbo charger 48 to the intake pipe 47, and outputs a signal indicative of the charged pressure to the ECU 71.

A water temperature sensor 75 is provided in a water jacket of the diesel engine 2. This sensor 75 senses a temperature of engine cooling water in the diesel engine 2, and outputs a signal indicative of the temperature of the engine cooling water to the ECU 71.

A crank angle sensor 76 is provided on the cylinder 41 in the vicinity of the crankshaft 40 of the diesel engine 2. This sensor 76 senses a crank angle of the crankshaft 40 relative to a reference position when the crankshaft 40 is rotated. The reference position is, for example, a position corresponding to a top dead center for a specific cylinder 41 of the diesel engine 2. The crank angle sensor 76 outputs a signal indicative of the crank angle of the crankshaft 40 to the ECU 71.

A vehicle speed sensor 77 is provided in a transmission (not shown) coupled to the diesel engine 2. This vehicle speed sensor 77 includes a magnet 77a and a lead switch 77b. The magnet 77a is rotated by rotation of a gear of the transmission, and the switch 77b is turned ON and OFF by the rotation of the magnet 77a. The vehicle speed sensor 77 senses a vehicle speed from the ON/OFF state of the switch 77b, and outputs a signal indicative of the vehicle speed to the ECU 71.

Outputs of the above-mentioned sensors 35 and 72 through 77 are connected to the ECU 71. The ECU 71 controls the operation of each of the elements 23, 33, 46, 56, 61 and 62 in accordance with the signals output from the above sensors.

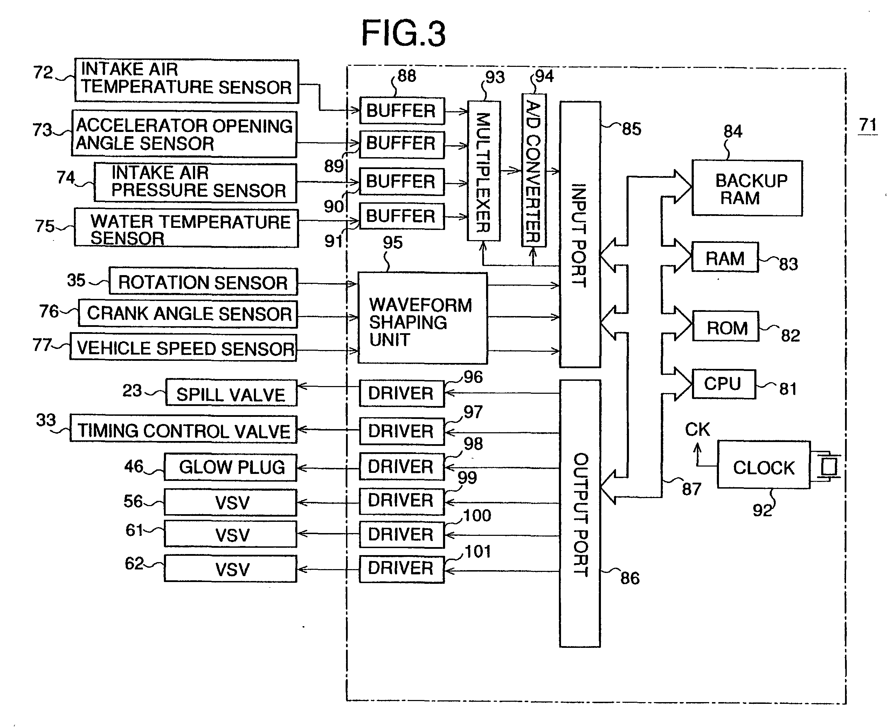

FIG.3 shows the electronic control unit (ECU) 71 of the diesel engine 2 in FIG.1.

Referring to FIG.3, the ECU 71 includes a central processing unit (CPU) 81, a read-only memory (ROM) 82, a random access memory (RAM) 83, a backup random access memory (BACKUP RAM) 84. The ROM 82 stores a control program and predetermined maps. A fuel injection control procedure of the present invention is executed by the ECU 71 in accordance with the control program and the maps stored in the ROM 82. The RAM 83 temporarily stores results of calculations performed by the CPU 81. The BACKUP RAM 84 stores a set of predetermined data pieces, and the stored data pieces are retained even when a power supply is off.

The ECU 71 includes a clock generator (CLOCK) 92 which generates a clock signal CK at a predetermined clock rate. The CLOCK 92 outputs the clock signal CK to the above units 81 through 84 of the ECU 71. Connecting lines between the clock unit 92 and the units 81 through 84 are not shown in FIG.3. The above units 81 through 84 operate at a rate in accordance with the clock rate of the CLOCK 92.

The ECU 71 includes an input port 85, an output port 86, and a bus 87. The units 81 through 84 of the ECU 71, the input port 85, and the output port 86 are interconnected by the bus 85. The ECU 71 is constituted as a logic operating circuit that controls an operation of the diesel engine 2.

The intake air temperature sensor 72, the accelerator opening angle sensor 73, the intake air pressure sensor 74, and the water temperature sensor 75 are connected to the input port 85 via four separate buffers 88, 89, 90 and 91, a multiplexer 93, and an analog-to-digital converter 94. Further, the rotation sensor 35, the crank angle sensor 76, and the vehicle speed sensor 77 are connected to the input port 85 via a waveform shaping unit 95.

The output port 86 is connected to the spill valve 23, the timing control valve 33, the glow plug 46, and the vacuum switching valves 56, 61 and 62 via six separate driver units 96, 97, 98, 99, 100 and 101.

The CPU 81 reads out, at the input port 85, inputs indicated by the signals from the above-mentioned sensors 35, 72, 73, 74, 75, 76 and 77. The CPU 81 performs calculations in accordance with the inputs, and outputs control signals to the spill valve 23, the timing control valve 33, the glow plug 46, and the VSVs 56, 61 and 62 via the driver units 96-101, so that the operations of these elements are controlled.

Next, a description will be given of the fuel injection control procedure which is executed by the ECU 71.

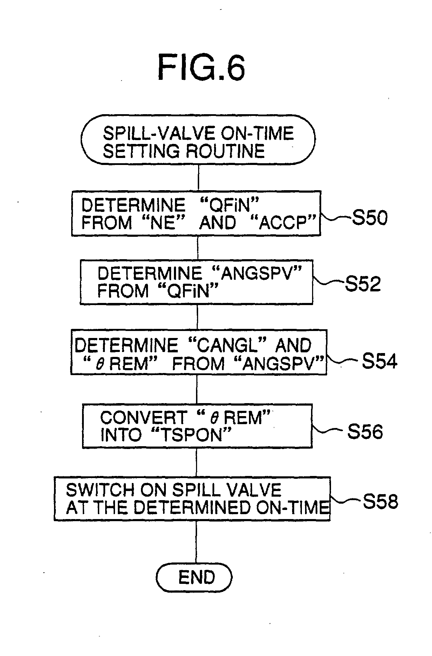

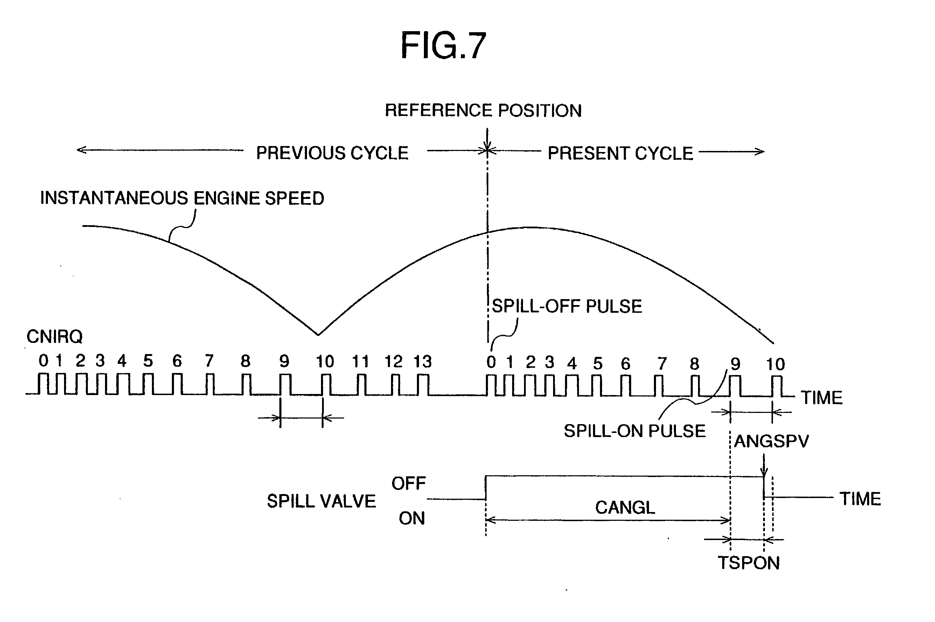

A basic concept of the fuel injection control will now be described with reference to FIGS.6 and 7.

In the fuel injection control procedure of the present invention, the amount of fuel to be injected to the diesel engine 2 is determined by controlling an on-time of the spill valve 23. More specifically, the on-time the spill valve 23 is switched to open the spill passage 22 is controlled so that the timing of the spilling of fuel from the spill valve 23 (or from the high-pressure chamber 15) to the fuel chamber 21 is controlled.

In the above fuel injection control procedure, during the compression stroke of the plunger 12, the spill valve 23 is switched to open the spill passage 22. The pressure of fuel in the high-pressure chamber 15 at this time is reduced, and the injection of fuel by the fuel injection nozzle 4 is stopped. Since the on-time the spill valve 23 is switched to open the spill passage 22 is determined in accordance with an operating condition of the diesel engine 2, the amount of fuel injected to the diesel engine 2 can be adjusted to a desired amount at the present instant which is appropriate for the operating condition of the engine. If the on-time the spill valve 23 is switched to open the spill valve 23 is suitably determined by the above fuel injection control procedure, the timing of the injection of the fuel to the diesel engine 2 is suitably determined in accordance with the determined on-time of the spill valve 23.

FIG.6 shows a spill-valve on-time setting routine in which the on-time the spill valve 23 is switched to open the spill passage 22 is set in accordance with an operating condition of the diesel engine 2. The timing of the injection of the fuel to the diesel engine 2 is suitably determined by this spill-valve on-time setting routine.

The spill-valve on-time setting routine shown in FIG.6 is executed each time an interrupt is issued to the CPU 81 by one of pulse signals (which are the NE signals indicative of an engine speed of the diesel engine 2) output by the rotation sensor 35. This interrupt is referred to as the NE interrupt, and a routine executed by the interrupt is referred to as the NE interrupt routine. This spill-valve on-time setting routine is the NE interrupt routine.

Referring to FIG.6, when the routine is started, the CPU 81, at step S50, determines a fuel injection command value "QFiN" from the engine speed "NE" and the accelerator opening angle "ACCP". As previously described, the engine speed NE is indicated by the signal output by the rotation sensor 35, and the accelerator opening angle ACCP is indicated by the signal output by the accelerator opening angle sensor 73. The fuel injection command value QFiN indicates an appropriate amount of fuel to be injected to the diesel engine 2 in accordance with the operating condition of the diesel engine 2 at the present instant.

Step S52 determines a fuel injection end position "ANGSPV" from the fuel injection command value "QFiN". The fuel injection end position ANGSPV indicates a position of the fuel injection pump 1 at which the spill valve 23 is switched to open the spill passage 22. In other words, the fuel injection end position ANGSPV indicates a specific angular position (crank angle) of the crankshaft 40 at the on-time that the spill valve 23 is switched to open the spill passage 22.

Step S54 determines a spill-off pulse count "CANGL" and a remaining angle "⊖REM" from the fuel injection end position ANGSPV.

As shown in FIG.7, the spill-off pulse count CANGL, determined at the step S54, indicates the number of pulse signals which have been output by the rotation sensor 35 from a time the fuel injection pump 1 is at a reference position to the on-time the fuel injection pump 1 is at the fuel injection end position ANGSPV. A final pulse signal (which will be called the spill-on pulse) is output by the rotation sensor 35 at the time the fuel injection pump 2 has just come to the fuel injection end position ANGSPV, and the final pulse signal is not included in the pulse signals of the spill-off pulse count CANGL. A value of the spill-off pulse count CANGL in the example of FIG.7 is equal to 9.

In addition, the remaining angle ⊖REM, determined at the step S54, indicates an amount of the rotating angle of the drive shaft 5 of the fuel injection pump 1 (or an amount of the rotating angle of the crankshaft 40) from the rising edge of the spill-on pulse (the above final pulse signal) to the fuel injection end position ANGSPV.

In the present embodiment, the reference position of the fuel injection pump 1 corresponds to the time one of the teeth of the pulser gear 7 is sensed by the rotation sensor 35 after one of the cut-out portions of the pulser gear 7, adjacent to the sensed tooth, is sensed by the rotation sensor 35 at the end of the previous cycle. This time is indicated by the rising edge of a first pulse signal (which will be called the spill-off pulse signal) output by the rotation sensor 35 within the present cycle, as shown in FIG.7.

Since the angle between two adjacent teeth of the pulser gear 7 is 11.25 degrees in the crank angle (CA), an amount of the rotating angle of the fuel injection pump 1 per one of the pulse signals output by the rotation sensor 35 in the present embodiment is also equal to 11.25 degrees in the crank angle (CA). Accordingly, the fuel injection end position ANGSPV can be defined by

$$ANGSPV = 11.25 \times CANGL + \ominus REM \qquad (1)$$

In the present embodiment, the program stored in the ROM 82 is provided with a pulse counter which generates a pulse count signal CNIRQ. This pulse count signal CNIRQ from the pulse counter is indicative of a pulse count of the pulse signals output by the rotation sensor 35 within the present cycle from the time the fuel injection pump 1 is at the reference position to the time the fuel injection pump 1 is at the fuel injection end position ANGSPV. The spill-off pulse count CANGL in the above Equation (1) is indicated by the pulse count signal CNIRQ output by the pulse counter.

The remaining angle ΘREM indicates an amount of the rotating angle (which is less than one revolution) of the fuel injection pump 1 from the rising edge of the spill-on pulse to the fuel injection end position ANGSPV, and it cannot be indicated by the pulse count signal CNIRQ from the pulse counter.

Step S56 converts the amount of the rotating angle of the fuel injection pump 1, indicated by the remaining angle ΘREM, into a remaining angle time "TSPON". The remaining angle time TSPON defines a duration that the drive shaft 5 of the fuel injection pump 1 is rotated to the fuel injection end position ANGSPV by the remaining angle ΘREM.

After the step S56 is performed, step S58 determines the on-time the spill valve 23 is switched to open the spill passage 22, by a sum of the value of the spill-off pulse count CANGL and the value of the remaining angle time TSPON. Further, the step S58 switches the spill valve 23 to open the spill passage 22 in accordance with the determined on-time. More specifically, the spill valve 23 is switched by the ECU 71 when the remaining angle time TSPON has elapsed after the number of the pulse signals indicated by the spill-off pulse count CANGL was counted. After the step S58 is performed, the spill-valve on-time setting routine in FIG. 6 ends.

Accordingly, the fuel injection control apparatus of the present invention can suitably control the amount of the fuel injected to the diesel engine 2 by performing the spill-valve on-time setting routine shown in FIG.6.

In order to reliably control the amount of the fuel injected to the diesel engine 2 in an undesired condition, it is necessary that the fuel injection control apparatus determines the correct value of the spill-off pulse count CANGL. To realize this, it is crucial that the fuel injection control apparatus detects an accurate value of the pulse count signal CNIRQ from the pulse counter even in an undesired condition.

For example, in a certain operating condition of the diesel engine 2, a discharging of static electricity within an automotive vehicle of the diesel engine 2 may take place. If the discharging of static electricity takes place, a disturbance tends to enter the diesel engine 2 from the ECU 71 or from the connecting line between the ECU 71 and the rotation sensor 35.

It is conceivable that two kinds of influences on the pulse count signal CNIRQ are caused when the disturbance enters the diesel engine 2. One of such influences is an inclusion of a noise pulse in the pulse count signal CNIRQ, and the other is an occurrence of a missing pulse in the pulse count signal CNIRQ.

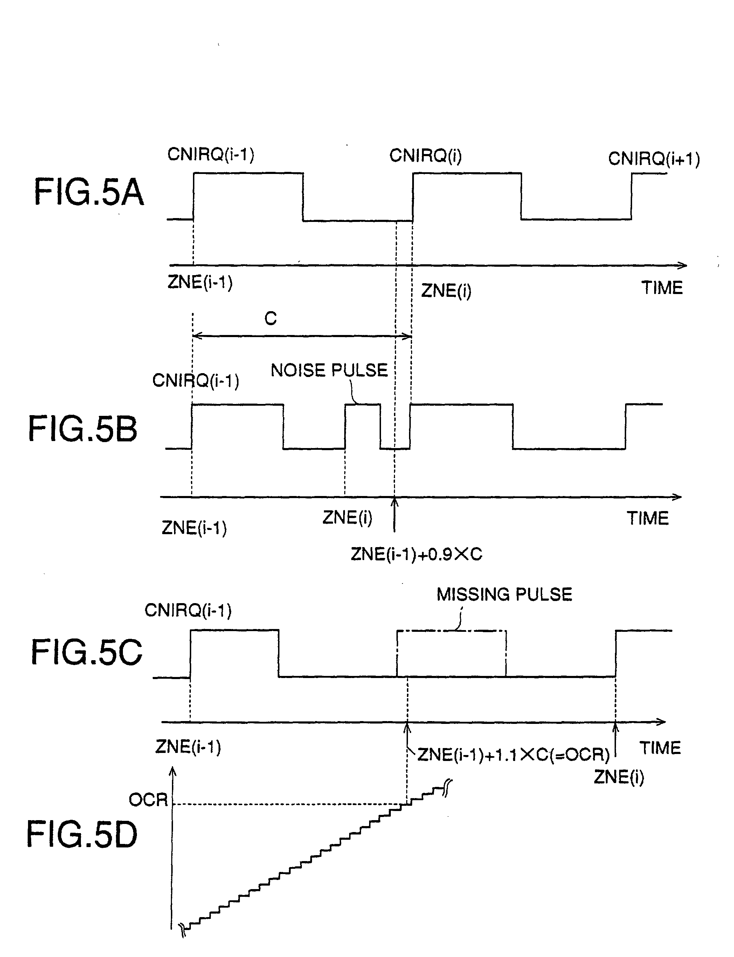

FIG.5A shows a condition of the pulse count signal CNIRQ which is normally output by the pulse counter when no disturbance takes place. FIG.5B shows a condition of the pulse count signal CNIRQ when a noise pulse is included therein due to the disturbance entering the diesel engine 2. FIG.5C shows a condition of the pulse count signal CNIRQ when a missing pulse therein takes place due to the disturbance entering the diesel engine 2.

When the noise pulse is included in the pulse count signal CNIRQ, as shown in FIG.5B, no countermeasure against the inclusion of the noise pulse in the pulse count signal is taken by the above conventional fuel injection control apparatus. In the above conventional fuel injection control apparatus, the noise pulse is erroneously detected as one of the pulse signals output by the rotation sensor 35. The pulse count is incremented by the noise pulse. Accordingly, in the conventional fuel injection control apparatus, the pulse count indicated by the pulse count signal CNIRQ at the time of the inclusion of the noise pulse is greater than the correct value.

In the above case, the spill valve 23 is switched to open the spill passage at a time earlier than the correct on-time of the spill valve 23, and the amount of fuel injected to the diesel engine 2 is smaller than a desired amount of the injected fuel for the operating condition of the diesel engine 2. For this reason, a drop of the engine speed or an engine stall tends to occur when the prior art fuel injection control apparatus is used.

When a missing pulse in the pulse count signal CNIRQ takes place, as shown in FIG.5C, no countermeasure against the occurrence of a missing pulse is taken by the above conventional fuel injection control apparatus. In the above conventional fuel injection control apparatus, if the missing pulse in the pulse count signal takes place, the occurrence of the missing pulse cannot be detected. The pulse count is not incremented if the missing pulse takes place. Accordingly, in the prior art fuel injection control apparatus, the pulse count indicated by the pulse count signal CNIRQ at the time of the occurrence of the missing pulse is smaller than the correct value.

In the above case, the spill valve 23 is switched to open the spill passage 22 at a time after the correct on-time of the spill valve 23, and the amount of fuel injected to the diesel engine 2 is greater than a desired amount of the fuel injected. For this reason, a rapid increase of the engine speed tends to occur when the prior art fuel injection control apparatus is used.

According to the present invention, if a present pulse-input time a pulse signal is normally input to the CPU 81 is already determined, it is possible to determine a predicted interval from the present pulse-input time to a next pulse-input time a following pulse signal is normally input to the CPU 81.

Referring back to FIG.5A, if a present pulse-input time "ZNE(i-1)" a present pulse signal "CNIRQ(i-1)" is normally input to the CPU 81 is already determined, a predicted interval "C" from the present pulse-input time "CNIRQ(i-1)" to a next pulse-input time "ZNE(i)" can be determined. At the next pulse-input time ZNE(i), a next pulse signal "CNIRQ(i)" is normally input to the CPU 81.

In order to eliminate the above-mentioned problems of the prior art fuel injection control apparatus, the fuel injection control apparatus in the present embodiment of the present invention takes countermeasures against the inclusion of a noise pulse and the occurrence of a missing pulse.

In the present embodiment, the predicted interval C is determined, and, if a pulse signal is input to the CPU 81 during the predicted interval C from the present pulse-input time ZNE(i-1) prior to the next pulse-input time ZNE(i), it is decided that the input pulse signal is a noise pulse. At this time, incrementing the pulse count by the pulse count signal CNIRQ is inhibited.

Further, in the present embodiment, the predicted interval C is determined, and, if no pulse signal is input to the CPU 81 after the predicted interval C from the present pulse-input time ZNE(i-1) to the next pulse-input time ZNE(i) has elapsed, it is decided that a missing pulse in the pulse count signal CNIRQ takes place. At this time, incrementing the pulse count is executed if no pulse signal is input to the CPU at the predicted next pulse-input time.

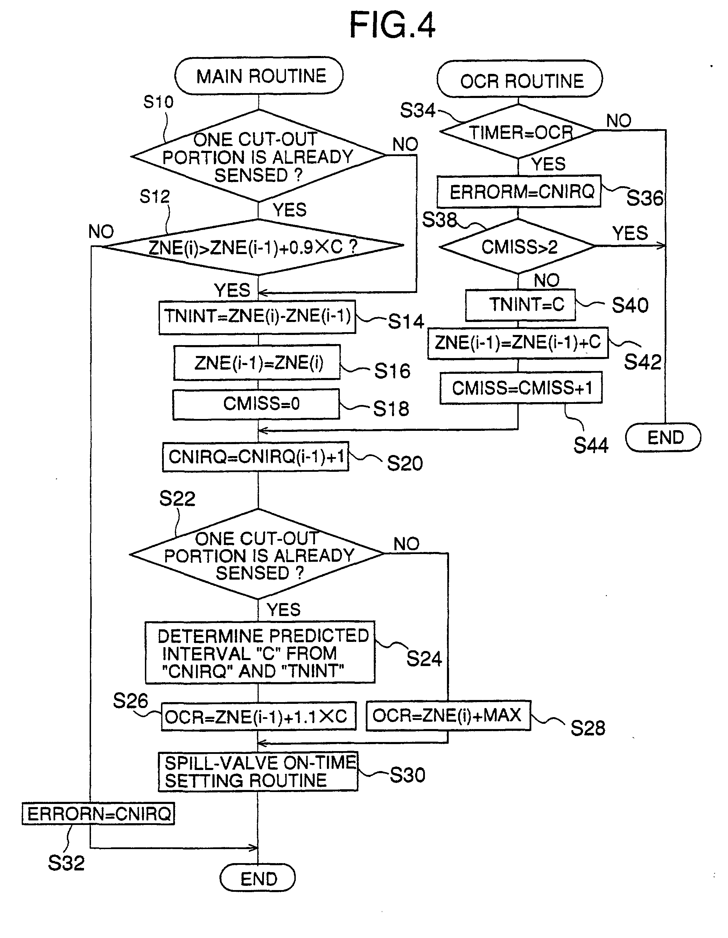

FIG.4 shows a fuel injection control procedure which is executed by the CPU 81 in the present embodiment. In this fuel injection control procedure, the above countermeasures against the inclusion of a noise pulse and the occurrence of a missing pulse are taken.

Referring to FIG.4, steps S10 through S32 (which are called a main routine) are performed each time an interrupt is issued to the CPU 81 by one of the pulse signals output by the rotation sensor 35, and steps S34 through S44 (which are called an OCR routine) are performed when a count value of clock signals of a free running counter (which will be described later) accords with a predicted next pulse-input time "OCR" (which will be described later).

The fuel injection control procedure in FIG.4 is started by a pulse signal from the rotation sensor 35 which is input to the CPU 81. Step S10 determines whether one of the cut-out portions of the pulser gear 7 is already sensed by the rotation sensor 35.

As previously described, the pulse count signal CNIRQ indicates a pulse count of the pulse signals from the rotation sensor when the counting is started from the reference position of the fuel injection pump 1. Therefore, the pulse count signal CNIRQ does not indicate the correct pulse count unless the one of the cut-out portions of the pulser gear 7 is already sensed.

If the result at the step S10 is affirmative, it is determined that the pulse count signal CNIRQ indicates the correct pulse count. Step S12 determines a next pulse-input time "ZNE(i)" at which a next pulse signal from the rotation sensor 35 is input to the CPU 81. In a normal case, the present cycle of the fuel injection control procedure has been started by the next pulse signal.

Further, the step S12 calculates a sum of the present pulse-input time "ZNE(i-1)" and a corrected predicted interval "0.9 x C" (the value of "C" at this step is determined within the previous cycle), and determines a predicted next pulse-input time from the sum (= ZNE(i-1) + 0.9 x C). Further, the step S12 determines whether the next pulse-input time ZNE(i) is greater than the predicted next pulse-input time ZNE(i-1) + 0.9 x C. The predicted interval C is multiplied by 0.9 to produce the corrected predicted interval because an error of the pulse input time is taken into consideration.

As shown in FIG.5B, if the inclusion of a noise pulse in the pulse count signal CNIRQ has occurred, the noise pulse is taken as the next pulse signal and the result at the step S12 is negative. Otherwise, the result at the step S12 is affirmative. Accordingly, by performing the step S12, it is possible to determine whether the inclusion of a noise pulse takes place.

If the result at the step S12 is affirmative, it is determined that the inclusion of a noise pulse does not take place. When the result at the step S10 is negative or when the result at the step S12 is affirmative, step S14 is performed. The step S14 determines a pulse interval "TNINT" from the present pulse-input time ZNE(i-1) to the next pulse-input time ZNE(i). That is, the pulse interval TNINT is calculated as the difference between the next pulse-input time ZNE(i) and the present pulse-input time ZNE(i-1).

Step S16 updates the present pulse-input time ZNE(i-1) by replacing the ZNE(i-1) with the ZNE(i), for use in a next cycle of the fuel injection control procedure. Step S18 resets a missing pulse count "CMISS" to zero (CMISS = 0). In the initial condition, it is assumed that the occurrence of a missing pulse does not yet takes place.

Step S20 increments the pulse count CNIRQ (CNIRQ = CNIRQ(i-1) + 1). The present cycle of the fuel injection control procedure is started by the next pulse signal which is normally input to the CPU 81.

Step S22 determines whether one of the cut-out portions of the pulser gear 7 is already sensed by the rotation sensor 35. This step is similar to the step S10.

If the result at the step S22 is affirmative, it is determined that the pulse count signal CNIRQ indicates the correct pulse count. Step S24 determines a predicted interval "C" from the pulse interval "TNINT" at the step S14 and the pulse count "CNIRQ" at the step S20. In the present embodiment, a two-dimensional map in which values of the predicted interval C are defined in accordance with the parameter of the pulse interval TNINT and in accordance with the parameter of the pulse count CNIRQ, is stored in the ROM 82. This map is used at the step S24 to determine the predicted interval C from the pulse interval TNINT and the pulse count CNIRQ.

If a three-dimensional map in which values of the predicted interval C are defined in accordance with a further parameter of an engine load in addition to the parameters of the pulse interval TNINT and the pulse count CNIRQ is used at the step S24 to determine the predicted interval C, a higher accuracy of the predicted interval C can be obtained. The two-dimensional and three-dimensional maps mentioned above can be produced from experimental results and stored in the ROM 82.

Step S26 determines a predicted next pulse-input time "OCR" which is used to detect the occurrence of a missing pulse in the pulse count signal CNIRQ. More specifically, a sum of the present pulse-input time "ZNE(i-1)" and a corrected predicted interval "1.1 x C" (the value of "C" is determined at the step S24 within the present cycle) is calculated, and the predicted next pulse-input time OCR is determined by the sum (= ZNE(i-1) + 1.1 x C). The predicted interval C is multiplied by 1.1 to produce the corrected predicted interval because an error of the pulse input time is taken into consideration.

Step S30 performs the spill-valve on-time setting routine shown in FIG.6. As previously described with reference to FIG.6, the on-time of the spill valve 23 is determined from the spill-off pulse count CANGL and the remaining angle $\ominus$REM at this step S30, and the spill valve 23 is switched at the determined on-time at this step S30.

Since the step S30 is performed when it is determined at the step S12 that the inclusion of a noise pulse does not take place, the determined on-time at the step S30 accurately accords with a desired on-time of the spill valve 23 for the operating condition of the diesel engine 2. Therefore, it is possible to accurately and stably control the amount of fuel to be injected to the diesel engine 2. After the step S30 is performed, the fuel injection control procedure in FIG.4 ends.

If the result at the step S12 is negative, a next pulse signal has been input to the CPU 81 at a time earlier than the predicted next pulse-input time (ZNE(i-1) + 0.9 x C). The next pulse signal is taken as a noise signal and it is determined that the inclusion of the noise pulse takes place. Thus, step S32 is performed, and the above steps S14 through S30 are not performed. Step S32 sets an error counter "ERRORN" of a noise pulse detection to the value of the pulse count "CNIRQ" at that time (ERRORN = CNIRQ), and stores the value of the error counter ERRORN. This error counter ERRORN is used to show the occurrence of the noise pulse, and indicates the pulse count value at the time of the noise pulse detection. The error counter ERRORN is provided for use in a maintenance of the diesel engine 2. After the step S32 is performed, the fuel injection control procedure in FIG.4 ends.

Accordingly, in the present embodiment, if the inclusion of a noise pulse takes place, only the step S32 is performed and the steps S14 through S30 are not performed. Thus, incrementing the pulse count at the step S20 is inhibited in this condition. The pulse count signal CNIRQ, even at the time of the inclusion of a noise pulse, indicates the correct count of the pulse signals actually output by the rotation sensor 35, not including the noise pulse.

Therefore, the spill valve 23 is switched correctly at the on-time of the spill valve 23, and the amount of fuel injected to the diesel engine 2 can be controlled to be the desired amount for the operating condition of the diesel engine 2. Thus, in the present embodiment, it is possible to avoid the occurrence of a drop of the engine speed or an engine stall.

In addition, in the present embodiment, if the inclusion of a noise pulse takes place, the above steps S14 through S30 are not performed. Updating the present pulse-input time ZNE(i-1) at the step S16 and incrementing the pulse count at the step S20 are not performed in this condition. Thus, even when the inclusion of the noise pulse takes place, the present pulse-input time ZNE(i-1), the next pulse-input time ZNE(i), and the pulse count signal CNIRQ are maintained to the present values prior to the inclusion of the noise pulse. The inclusion of the noise pulse does not influence the performance of the fuel injection control procedure in the next cycle.

The occurrence of a missing pulse, as shown in FIG.5C, cannot be detected by performing the above main routine of the steps S10 through S32. To detect the occurrence of a missing pulse in the present embodiment, the OCR routine of the steps S34 through S44 is performed.

In the present embodiment, the ECU 71 is provided with a free running counter which generates a signal indicative of a count value of the clock signals output by the CLOCK 92.

FIG.5D shows a change of the count value of the clock signals, indicated by the signal from this free running counter. The signal from the free running counter is also used at the step S58 of FIG.6 to determine when the remaining angle time TSPON has elapsed from the end of the CANGLE.

The steps S34 through S44 in the OCR routine are not performed at the same rate as the steps S10 through S32 in the main routine, but performed each time the count value indicated by the signal from the above free running counter accords with the predicted next pulse-input time OCR.

Step S34 detects whether a count time "TIMER" (which is the count value of the clock signals indicated by the signal from the free running counter) is equal to the predicted next pulse-input time "OCR" at the step S26.

Generally, when no missing pulse in the pulse count signal CNIRQ takes place, all the pulse signals from the rotation sensor 35 are input. That is, in this normal case, a next pulse signal output by the rotation sensor 35 is input to the CPU 81 at a time prior to the predicted next pulse-input time OCR. At the step S26, the predicted next pulse-input time OCR is updated in each cycle by the sum of the present pulse-input time ZNE(i-1) and the corrected predicted interval 1.1 x C. Thus, the next pulse-input time ZNE(i) in the normal case is always smaller than the predicted next pulse-input time OCR. Accordingly, when no missing pulse takes place, the result at the step S34 is always negative.

On the other hand, when a missing pulse in the pulse count signal CNIRQ takes place, the result at the step S34 is affirmative (TIMER = OCR), and a next pulse signal output by the rotation sensor 35 is input to the CPU 81 after the predicted next pulse-input time OCR.

Hence, in the present embodiment, if the result at the step S34 is negative, it is determined that no missing pulse in the pulse count signal CNIRQ takes place. The following steps S36 through S44 are not performed, and the OCR routine immediately ends. The next cycle of the main routine of the steps S10 through S32 will be executed.

If the result at the step S34 is affirmative, it is determined that a missing pulse in the pulse count signal CNIRQ takes place. Step S36 sets an error counter "ERRORM" of a missing pulse detection to the value of the pulse count "CNIRQ" at the present instant (ERRORM = CNIRQ), and stores the value of the error counter ERRORM. This error counter ERRORM is used to show the detection of a missing pulse, and indicates the pulse count value at the time of the missing pulse detection. Similarly to the error counter ERRORN, the error counter ERRORM is provided for use in the maintenance of the diesel engine 2.

After the step S36 is performed, step S38 detects whether the missing pulse count "CMISS" is greater than 2 (CMISS > 2). The missing pulse count CMISS is reset to zero at the step S18 (in the normal case), and it is updated each time the OCR routine is performed (in the missing pulse detection case), to indicate the latest value.

If the result at the step S38 is negative, the missing pulse count CMISS is below 2. Step S40 updates the pulse interval TNINT by replacing the same with the predicted interval C. This predicted interval C is already determined at the step S24. In addition, at the previous step S34, it is already determined that the missing pulse takes place.

After the step S40 is performed, step S42 updates the present pulse-input time ZNE(i-1) by replacing the same with a sum of the present pulse-input time ZNE(i-1) and the predicted interval C. Updating the present pulse-input time ZNE(i-1) at this step S42 is necessary when performing the next cycle of the main routine.

After the step S42 is performed, step S44 increments the missing pulse count CMISS (CMISS = CMISS + 1). Thus, the missing pulse count CMISS is updated at the step S44 each time the OCR routine is performed, so that it indicates the latest number of occurrences of the missing pulse.

After the step S44 is performed, the above step S20 in the main routine is performed. As previously described, the steps S10 through S32 in the main routine are not performed at the same rate as the steps S34 through S44 in the OCR routine. The OCR routine of the steps S34 through S44 is performed each time the count value of the clock signals from the free running counter accords with the predicted next pulse-input time OCR.

At the step S20, as previously described, the pulse count is incremented (CNIRQ = CNIRQ(i-1) + 1). Since it is already determined that the missing pulse in the pulse count signal CNIRQ takes place as indicated by a one-dotted chain line in FIG.5C, the pulse count is incremented at this step S20 if no pulse signal is input to the CPU 81 at the predicted next pulse-input time OCR.

At the step S22, whether one of the cut-out portions of the pulser gear 7 is already sensed by the rotation sensor 35 is determined. Performing this step S22 is necessary when it is performed after the steps S34 through S44 in the OCR routine are performed. In such a case, the step S10 in the main routine is not performed.

If the result at the step S22 is negative, it is determined that the pulse count signal CNIRQ does not indicate the correct pulse count. Step S28 determines a predicted next pulse-input time "OCR" by replacing the same with a sum of the next pulse-input time "ZNE(i)" and a maximum value "MAX" (OCR = ZNE(i) + MAX). Once the step S28 is performed, the result at the step S34 in the subsequent cycle is always negative, and the steps S36 through S44 are no longer performed. Thus, in the present embodiment, it is possible to avoid performing the fuel injection control procedure inaccurately.

If the result at the step S22 is affirmative, it is determined that the pulse count signal CNIRQ indicates the correct pulse count. At the step S24, the predicted interval "C" is determined from the pulse interval "TNINT" at the step S14 and the pulse count "CNIRQ" at the step S20 by using the map stored in the ROM 82. At the step S26, the predicted next pulse-input time "OCR" is determined by the sum of the present pulse-input time "ZNE(i-1)" and the corrected predicted interval "1.1 x C".

Further, at the step S30, the spill-valve on-time setting routine shown in FIG.6 is performed. As previously described with reference to FIG.6, the on-time of the spill valve 23 is determined from the spill-off pulse count CANGL and the remaining angle ΘREM, and the spill valve 23 is switched at the determined on-time.

As described above, in the present embodiment, when the occurrence of a missing pulse is detected at the step S34, incrementing the pulse count CNIRQ is executed if no pulse signal is input to the CPU 81 at the predicted next pulse-input time. Further, the pulse interval TNINT and the present pulse-input time ZNE(i-1) are updated.

Therefore, the fuel injection control apparatus in the present embodiment can prevent the pulse count, indicated by the pulse count signal CNIRQ at the time of the occurrence of the missing pulse, from being smaller than the correct value. The spill valve 23 is switched accurately at the correct on-time, and the amount of fuel injected to the diesel engine 2 can be controlled to a desired amount of the fuel injected. Accordingly, in the present embodiment, it is possible to avoid the problem of a rapid increase of the engine speed which arises when the prior art fuel injection control apparatus is used.

If the result at the step S38 is affirmative, the missing pulse count CMISS is above 3. When the occurrence of the missing pulse is detected at three or more times, the accuracy of the fuel injection may be considerably lowered due to the repetition of the determination of the predicted pulse-input time. Therefore, the OCR routine immediately ends, and the incrementing of the pulse count and the updating of the present pulse-input time and the pulse interval are inhibited in the present embodiment.

In the above-described embodiment, the fuel injection control apparatus of the present invention is applied to the spill-valve on-time determination. However, the fuel injection control apparatus of the present invention is also applicable to a spill-valve off-time determination.

In the above-described embodiment, when the missing pulse count CMISS is greater than 2, the determination of the predicted next pulse-input time is inhibited. However, the present invention is not limited to this embodiment. A different timing to inhibit the determination of the predicted next pulse-input time may be used.

In the above-described embodiment, the error counter ERRORN of the noise pulse detection and the error counter ERRORM of the missing pulse detection, which indicate the pulse count value at the detection time, are stored for use in the maintenance of the diesel engine 2. According to the present invention, another embodiment in which different error counters indicating the respective numbers of detections of the noise pulse and the missing pulse, in addition to the error counters ERRORN and ERRORM may be used. The use of such an embodiment will further improve the convenience related to the maintenance of the diesel engine 2.

**Claims**

1. A fuel injection control apparatus in which an amount of fuel injected to a diesel engine is controlled in accordance with a pulse count value of a pulse counter, said pulse count value being incremented when one of pulse signals from a rotation sensor is input, and said pulse count value being reset to zero when one of cycles of a fuel injection control procedure is completed, said apparatus **characterized by**

   predicting means (S24) determining a predicted interval between a present pulse-input time at which a present pulse signal from the rotation sensor (35) is input and a next pulse-input time at which a next pulse signal from the rotation sensor (35) is input;

   wherein
   the incrementing of the pulse count value is inhibited by inhibiting means (S12) when the pulse signal is input at a time after the present pulse-input time and prior to the predicted interval determined by said predicting means (S24), and/or
   the incrementing of the pulse count value is executed by executing means (S34) when no pulse signal is input after the predicted interval determined by said predicting means (S24) has elapsed from the present pulse-input time.

2. The fuel injection control apparatus according to claim 1, *characterized in that* said apparatus further comprises:

   on-time setting means (S30) determining an on-time a spill valve (23) is switched to open a spill passage (22), from an engine speed sensed by the rotation sensor (35) and from an accelerator opening angle sensed by an accelerator opening angle sensor (73).

3. The fuel injection control apparatus according to claim 2, *characterized in that* said on-time setting means (S30) switches the spill valve (23) to open the spill passage (22) at the determined on-time, so that the amount of fuel injected to the diesel engine is controlled.

4. The fuel injection control apparatus according to claim 1, *characterized in that* said apparatus further comprises:

   means (S44) incrementing a missing pulse count value each time it is determined by said executing means (S34) that a said pulse signal is input at a time after the predicted interval has elapsed from the present pulse-input time.

5. The fuel injection control apparatus according to claim 4, *characterized in that* said apparatus further comprises:

   means (S38) inhibiting the incrementing of the pulse count value when said missing pulse count value is greater than a predetermined value, and allowing the incrementing of the pulse count value to be executed when the missing pulse count value is not greater than the predetermined value.

6. The fuel injection control apparatus according to claim 1, *characterized in that* said inhibiting means (S12) determines a predicted next pulse-input time from a sum of the present pulse-input time and a corrected predicted interval k x C, wherein k is a predetermined value smaller than 1 and C is the predicted interval.

7. The fuel injection control apparatus according to claim 1, *characterized in that* said apparatus further comprises:

means (S26) determining a predicted next pulse-input time from a sum of the present pulse-input time and a corrected predicted interval k x C, where k is a predetermined value greater than 1 and C is the predicted interval.

8. The fuel injection control apparatus according to claim 1, *characterized in that* said apparatus further comprises:

means (S32) setting an error counter of a noise pulse detection to the pulse count value of the pulse counter when said inhibiting means (S12) determines that an inclusion of a noise pulse in a pulse signal of the pulse counter has occurred, and said means storing the value of the error counter.

9. The fuel injection control apparatus according to claim 1, *characterized in that* said executing means (S34) determines that a missing pulse in said pulse count signal of the pulse counter has occurred, when a count value of clock signals of a free running counter is equal to a predicted next pulse-input time.

**Patentansprüche**

1. Kraftstoffeinspritzgerät, bei dem eine in eine Dieselbrennkraftmaschine eingespritzte Kraftstoffmenge entsprechend einem Impulszählwert eines Impulszählers gesteuert wird, wobei der Impulszählwert inkrementiert wird, wenn ein Impulssignal von Impulssignalen eines Rotationssensors eingegeben wird, und der Impulszählwert auf Null zurückgesetzt wird, wenn ein Zyklus von Zyklen einer Kraftstoffeinspritzsteuerungsverarbeitung abgeschlossen ist, wobei das Gerät **gekennzeichnet ist durch**

eine Vorhersageeinrichtung (S24), die ein vorhergesagtes Intervall zwischen einer gegenwärtigen Impulseingabezeit, zu der ein gegenwärtiges Impulssignal aus dem Rotationssensor (35) eingegeben wird, und einer nächsten Impulseingabezeit bestimmt, zu der ein nächstes Impulssignal aus dem Rotationssensor eingegeben wird, wobei

die Inkrementierung des Impulszählwerts **durch** eine Blockiereinrichtung (S12) blockiert wird, wenn das Impulssignal zu einer Zeit nach der gegenwärtigen Impulseingabezeit und vor dem **durch** die Vorhersageeinrichtung (S24) bestimmten vorhergesagten Intervall eingegeben wird, und/oder

die Inkrementierung des Impulszählwerts **durch** eine Ausführungseinrichtung (S34) ausgeführt wird, wenn nach Verstreichen des **durch** die Vorhersageeinrichtung (S24) bestimmten vorhergesagten Intervalls nach der gegenwärtigen Impulseingabezeit kein Impulssignal eingegeben wird.

2. Kraftstoffeinspritzgerät nach Anspruch 1, **dadurch gekennzeichnet, dass** das Gerät weiterhin aufweist:

eine Einschaltzeiteinstellungseinrichtung (S30), die eine Einschaltzeit, in der ein Überströmventil (23) zum öffnen eines Überströmdurchlasses (22) geschaltet wird, anhand einer durch den Rotationssensor (35) erfassten Maschinendrehzahl und anhand eines durch einen Beschleunigungsvorrichtungs-Öffnungswinkelsensors (73) erfassten Beschleunigungsvorrichtungs-Öffnungswinkels bestimmt.

3. Kraftstoffeinspritzgerät nach Anspruch 2, **dadurch gekennzeichnet, dass** die Einschaltzeiteinstellungseinrichtung (S30) das Überströmventil (23) zum öffnen des Überströmdurchlasses (22) zu der bestimmten Einschaltzeit schaltet, so dass die in die Dieselbrennkraftmaschine eingespritzte Kraftstoffmenge gesteuert wird.

4. Kraftstoffeinspritzgerät nach Anspruch 1, **dadurch gekennzeichnet, dass** das Gerät weiterhin eine Einrichtung (S44) aufweist, die einen fehlenden Impulszählwert jedes Mal inkrementiert, wenn durch die Ausführungseinrichtung (S34) bestimmt wird, dass das Impulssignal zu einer Zeit, nach Verstreichen des vorhergesagten Intervalls nach der gegenwärtigen Impulseingabezeit eingegeben wird.

5. Kraftstoffeinspritzgerät nach Anspruch 4, **dadurch gekennzeichnet, dass** das Gerät weiterhin eine Einrichtung (S38) aufweist, die den Impulszählwert blockiert, wenn der fehlende Impulszählwert größer als ein vorbestimmter Wert ist, und die Ausführung der Inkrementierung des Impulszählwerts erlaubt, wenn der fehlende Impulszählwert nicht größer als der vorbestimmte Wert ist.

6. Kraftstoffeinspritzgerät nach Anspruch 1, **dadurch gekennzeichnet, dass** die Blockiereinrichtung (S12) eine vorhergesagte nächste Impulseingabezeit anhand einer Summe der gegenwärtigen Impulseingabezeit und eines korrigierten vorhergesagten Intervalls k x C bestimmt, wobei k ein vorbestimmter Wert ist, der kleiner als 1 ist, und C das vorhergesagte Intervall ist.

**7.** Kraftstoffeinspritzgerät nach Anspruch 1, **dadurch gekennzeichnet, dass** das Gerät weiterhin aufweist:

eine Einrichtung (S26), die eine vorhergesagte nächste Impulseingabezeit anhand einer Summe der gegenwärtigen Impulseingabezeit und eines korrigierten Intervalls k x C bestimmt, wobei k ein vorbestimmter Wert ist, der größer als 1 ist, und C das vorhergesagte Intervall ist.

**8.** Kraftstoffeinspritzgerät nach Anspruch 1, **dadurch gekennzeichnet, dass** das Gerät weiterhin aufweist:

eine Einrichtung (S32), die einen Fehlerzähler einer Störungsimpulserfassung auf den Impulszählwert des Impulszählers einstellt, wenn die Blokkiereinrichtung (S12) bestimmt, dass ein Einschluss eines Störungsimpulses in einem Impulssignal des Impulszählers aufgetreten ist, und die Einrichtung den Wert des Zählerwerts speichert.

**9.** Kraftstoffeinspritzgerät nach Anspruch 1, **dadurch gekennzeichnet, dass** die Ausführungseinrichtung (S34) bestimmt, dass ein fehlender Impuls in dem Impulszählwert des Impulszählers aufgetreten ist, wenn ein Zählwert von Taktsignalen eines frei laufenden Zählers gleich einer vorhergesagten nächsten Impulseingabezeit ist.

**Revendications**

**1.** Un dispositif de commande de l'injection de carburant dans lequel une quantité de carburant injectée dans un moteur diesel est commandée en fonction d'une valeur du compte d'impulsions d'un compteur d'impulsions, ladite valeur du compte d'impulsions étant incrémentée lorsque l'un des signaux d'impulsion délivrés par un capteur de rotation est injecté en entrée, et ladite valeur du compte d'impulsions étant remise à zéro lorsqu'un des cycles d'une procédure de commande d'injection de carburant est achevé, ledit dispositif étant **caractérisé par**
un moyen de prédiction (S24) définissant une durée prédite entre un instant d'entrée d'impulsion courante auquel un signal d'impulsion courant délivré par le capteur de rotation (35) est injecté en entrée et un instant d'entrée d'impulsion suivante auquel le signal d'impulsion suivant délivré par le capteur de rotation (35) est injecté en entrée ;
dans lequel

l'incrémentation de la valeur du compte d'impulsions est interdite par un moyen d'interdiction (S12) lorsque le signal d'impulsion est injecté en entrée à un instant se situant après l'instant d'entrée de l'impulsion courante et avant la durée prédite déterminée par ledit moyen de prédiction (S24), et/ou

l'incrémentation de la valeur du compte d'impulsions est exécutée par le moyen d'exécution (S34) lorsque aucun signal d'impulsion n'est injecté en entrée après que la durée prédite déterminée par ledit moyen de prédiction (S34) s'est écoulée depuis l'instant d'entrée de l'impulsion courante.

**2.** Le dispositif de commande de l'injection de carburant selon la revendication 1, **caractérisé en ce que** ledit dispositif comprend en outre :

un moyen de réglage de temps de marche (S30) définissant un temps de marche auquel une soupape de décharge (23) est commutée pour ouvrir un passage de décharge (22), en fonction d'un régime du moteur détecté par le capteur de rotation (35) et en fonction d'un angle d'ouverture d'accélérateur détecté par un capteur d'angle d'ouverture d'accélérateur (73).

**3.** Le dispositif de commande de l'injection de carburant selon la revendication 2, **caractérisé en ce que** ledit moyen de réglage de temps de marche (S30) commute la soupape de décharge (23) pour ouvrir le passage de décharge (22) au temps de marche déterminé, de sorte que la quantité de carburant injectée dans le moteur diesel est contrôlée.

**4.** Le dispositif de commande de l'injection de carburant selon la revendication 1, **caractérisé en ce que** ledit dispositif comprend en outre :

un moyen (S44) incrémentant une valeur du compte d'impulsions manquantes à chaque fois que ledit moyen d'exécution (S34) détermine que ledit signal d'impulsion est injecté en entrée à un instant après que la durée prédite s'est écoulée depuis l'instant d'entrée de l'impulsion courante.

**5.** Le dispositif de commande de l'injection de carburant selon la revendication 4, **caractérisé en ce que** ledit dispositif comprend en outre :

un moyen (S38) interdisant l'incrémentation de la valeur du compte d'impulsions lorsque ladite valeur du compte d'impulsions manquantes est supérieure à une valeur prédéterminée, et autorisant que l'incrémentation de la valeur du compte d'impulsions soit exécutée lorsque la valeur du compte d'impulsions manquantes n'est pas supérieure à la valeur prédéterminée.

6.  Le dispositif de commande de l'injection de carburant selon la revendication 1, **caractérisé en ce que** ledit moyen d'interdiction (S12) définit un instant prédit d'entrée d'impulsion suivante à partir d'une somme de l'instant d'entrée de l'impulsion courante et d'une durée prédite corrigée k x C, où k est une valeur prédéterminée inférieure à 1 tandis que C est la durée prédite.

7.  Le dispositif de commande de l'injection de carburant selon la revendication 1, **caractérisé en ce que** ledit dispositif comprend en outre :

    un moyen (S26) définissant un instant prédit d'entrée d'impulsion suivante à partir d'une somme de l'instant d'entrée de l'impulsion courante et d'une durée prédite corrigée k x C, où k est une valeur prédéterminée supérieure à 1 tandis que C est la durée prédite.

8.  Le dispositif de commande de l'injection de carburant selon la revendication 1, **caractérisé en ce que** ledit dispositif comprend en outre :

    un moyen (332) réglant un compteur d'erreurs relatif à une détection d'impulsions parasites sur la valeur du compte d'impulsions du compteur d'impulsions lorsque ledit moyen d'interdiction (S12) détermine qu'une impulsion parasite s'est introduite dans le signal d'impulsion du compteur d'impulsions, et ledit moyen mémorisant la valeur du compteur d'erreurs.

9.  Le dispositif de commande de l'injection de carburant selon la revendication 1, **caractérisé en ce que** ledit moyen d'exécution (S34) détermine qu'une impulsion manquante dans ledit signal du compte d'impulsions du compteur d'impulsions s'est produite, lorsqu'une valeur de compte des impulsions d'horloges d'un compteur non asservi est égale à un temps prédit d'entrée d'impulsion suivante.

FIG. 1

**FIG. 2**

# FIG.3

72 INTAKE AIR TEMPERATURE SENSOR

73 ACCELERATOR OPENING ANGLE SENSOR

74 INTAKE AIR PRESSURE SENSOR

75 WATER TEMPERATURE SENSOR

88 BUFFER

89 BUFFER

90 BUFFER

91 BUFFER

93 MULTIPLEXER

94 A/D CONVERTER

85 INPUT PORT

84 BACKUP RAM

83 RAM

82 ROM

81 CPU

35 ROTATION SENSOR

76 CRANK ANGLE SENSOR

77 VEHICLE SPEED SENSOR

95 WAVEFORM SHAPING UNIT

23 SPILL VALVE

33 TIMING CONTROL VALVE

46 GLOW PLUG

56 VSV

61 VSV

62 VSV

96 DRIVER

97 DRIVER

98 DRIVER

99 DRIVER

100 DRIVER

101 DRIVER

86 OUTPUT PORT

87

CK

92 CLOCK

71

EP 0 738 829 B1

# FIG.4

**FIG.5A**

CNIRQ(i-1)  CNIRQ(i)  CNIRQ(i+1)

ZNE(i-1)  ZNE(i)  TIME

C

**FIG.5B**

CNIRQ(i-1)  NOISE PULSE

ZNE(i-1)  ZNE(i)  TIME

ZNE(i-1)+0.9×C

MISSING PULSE

**FIG.5C**

CNIRQ(i-1)

ZNE(i-1)  ZNE(i-1)+1.1×C(=OCR)  TIME

ZNE(i)

**FIG.5D**

OCR

# FIG.6

SPILL-VALVE ON-TIME
SETTING ROUTINE

DETERMINE "QFiN"
FROM "NE" AND "ACCP" — S50

DETERMINE "ANGSPV"
FROM "QFiN" — S52

DETERMINE "CANGL" AND
"$\theta$ REM" FROM "ANGSPV" — S54

CONVERT "$\theta$ REM"
INTO "TSPON" — S56

SWITCH ON SPILL VALVE
AT THE DETERMINED ON-TIME — S58

END

# FIG.7